Europäisches Patentamt

European Patent Office

Office européen des brevets

(11) Veröffentlichungsnummer: **0 288 902**

**A1**

(12) ## EUROPÄISCHE PATENTANMELDUNG

(21) Anmeldenummer: **88106371.3**

(22) Anmeldetag: **21.04.88**

(51) Int. Cl.⁴: **F25B 49/00 , F25B 41/06**

(30) Priorität: **28.04.87 DE 3714120**

(43) Veröffentlichungstag der Anmeldung:
**02.11.88 Patentblatt 88/44**

(84) Benannte Vertragsstaaten:
**ES FR GB IT SE**

(71) Anmelder: **EMERSON ELECTRIC GMBH**
**Heerstrasse 111**
**D-7050 Waiblingen(DE)**

(72) Erfinder: **Jäger, Norman**
**Wilhelm-Leuschner-Strasse 27**
**D-6057 Dietzenbach(DE)**
Erfinder: **Bachtenkirch, Egon**
**Trollingerweg 1**
**D-7050 Waiblingen(DE)**

(74) Vertreter: **Rüger, Rudolf, Dr.-Ing. et al**
**Webergasse 3 Postfach 348**
**D-7300 Esslingen/Neckar(DE)**

(54) **Kälteanlage.**

(57) Bei einem Verfahren zur Regelung der Überhitzung des Kältemittels am Ausgang eines in einem zumindest noch einen Verdichter (1) und ein Expansionsventil (3) enthaltenden Kältemittelkreislauf betriebenen Verdampfers (5) einer Kälteanlage werden die Überhitzungstemperatur und der Druck des verdampften Kältemittels am Verdampferausgang laufend gemessen. Durch einen Rechner (12) wird der diesem gemessenen Sättigungsdruckwert ($p_s$) im Zustandsdiagramm des Kältemittels entsprechende Sättigungstemperaturwert ($t_s$) ermittelt, worauf durch Differenzbildung zwischen dem gemessenen Überhitzungstemperaturwert ($t_{ü}$) und dem so ermittelten Sättigungstemperaturwert ($t_s$) die tatsächliche Überhitzung bestimmt wird. Der dieser Überhitzung entsprechende Temperaturdifferenzwert ($\Delta t_{eff}$) wird mit einem Sollwert verglichen; aus diesem Sollwert/Istwert-Vergleich wird ein Stellsignal für das Expansionsventil abgeleitet.

Fig. 1

## Kälteanlage

Die Erfindung betrifft ein Verfahren zur Regelung der Überhitzung des Kältemittels am Ausgang eines in einem zumindest noch einen Verdichter und ein Expansionsventil enthaltenden Kaltemittelkreislauf betriebenen Verdampfers einer Kälteanlage, bei dem die Überhitzungstemperatur am Verdampferausgang laufend gemessen und aus dem Überhitzungstemperatur-Meßwert und anderen überwachten Parametern des Kältemittelkreislaufs durch Vergleich mit einem Sollwert ein Stellsignal für das Expansionsventil abgeleitet wird. Außerdem betrifft die Erfindung eine Kälteanlage mit einem Kältemittelkreislauf, der zumindest einen Verdichter, ein als Regelventil ausgebildetes Expansionsventil und einen Verdampfer enthält, mit einer am Ausgang des Verdampfers angeordneten Temperaturmeßeinrichtung zur Messung der Überhitzungstemperatur des Kältemittels und mit einer Regeleinrichtung, die aus einem von der Temperaturmeßeinrichtung abgegebenen, für die Überhitzungstemperatur kennzeichnenden Signal und für andere Parameter des Kältemittelkreislaufes kennzeichnenden Signalen ein Stellsignal für das Expansionsventil ableitet. Schließlich betrifft die Erfindung noch ein druckentlastetes Expansionsventil für eine solche Kälteanlage mit einem elektromotorischen Antrieb für das in einem Ventilgehäuse verstellbar gelagerte Ventilglied.

Unter "Kälteanlagen" in diesem Sinne sind ganz allgemein mit einem Kreisprozeß des Kältemittels arbeitende thermodynamische Anlagen verstanden, bei denen dampfförmiges Kältemittel am Ausgang eines Verdampfers angesaugt und verdichtet, anschließend unter Wärmeabgabe kondensiert, daraufhin über ein Expansionsventil expandiert und in einem Verdampfer unter Wärmeaufnahme verdampft wird. Zu solchen Anlagen zählen Klimaanlagen, Wärmepumpen, Wärmerückgewinnungsanlagen, Gefrieranlagen, Eiserzeugungsanlagen, Kühlanlagen, um nur einige Beispiele zu nennen.

Bei diesen Anlagen muß generell Vorsorge getroffen werden, daß einerseits die zur Verfügung stehende Wärmeaustauschfläche des Verdampfers optimal ausgenutzt wird, andererseits aber sichergestellt ist, daß das Kältemittel beim Eintritt in den Verdichter vollständig in den dampfförmigen Zustand überführt ist. In dem am Ausgang des Verdampfers von dem Verdichter angesaugten dampfförmigen Kältemittel noch enthaltene Flüssigkeitströpfchen führen nämlich zu einer erheblichen mechanischen Beanspruchung des Verdichters (Flüssigkeitsschläge); sie müssen deshalb mit Rücksicht auf den ordnungsgemäßen Betrieb und die Lebensdauer des Verdichters vermieden werden. Praktisch wird dies dadurch erreicht, daß das Kältemittel den Verdampfer mit einer bestimmten Überhitzung verläßt, damit der Verdichter keine unverdampften Flüssigkeitsanteile ansaugt.

Diese Überhitzung wird über das Expansionsventil eingeregelt, das den Verdampfer immer mit einem Massenstrom flüssigen Kältemittel solcher Größe versorgt, daß unter den jeweiligen Betriebsbedingungen, unter denen das Kältemittel verdampft, ein Gleichgewicht zwischen zugeführtem flüssigem und abgesaugtem überhitztem, dampfförmigem Kältemittel aufrecht erhalten bleibt. Dabei ist es bekannt, mittels zweier Temperaturfühler die Temperatur des Kältemittels am Verdampfereingang und am Verdampferausgang zu messen und aus der Differenz dieser beiden Temperaturwerte ein Überhitzungssignal zu erzeugen, von dem in einem Regler durch einen Sollwert/Istwert-Vergleich ein Stellsignal für das Expansionsventil abgeleitet wird, dessen Antrieb einen temperaturgesteuerten Membran-Antriebsmotor oder einen elektrisch angesteuerten Schrittmotor aufweist. *

Wegen des unvermeidlichen kältemittelseitigen Druckverlustes in dem Verdampfer weicht das aus der Temperaturmessung am Verdampfereingang und am Verdampferausgang abgeleitete Überhitzungssignal von der tatsächlichen Überhitzung mehr oder weniger stark ab, mit dem Ergebnis, daß mit Rücksicht auf den Verdichter aus Sicherheitsgründen der Verdampfer mit einer verhältnismäßig großen Überhitzung betrieben werden muß, die typischerweise in der Größenordnung von 12 bis 13°K liegt. Die dadurch bedingte Verschlechterung der Ausnutzung des Verdampfers muß in Kauf genommen werden. Bei Verdampfern mit hohem Druckverlust kann eine optimale Nutzung der Verdampferfläche überhaupt nur mit zusätzlichen Maßnahmen erreicht werden, die aufwendig und teuer sind.

Aufgabe der Erfindung ist es deshalb, einen Weg zu weisen, der es gestattet, ohne Gefährdung des Verdichters durch angesaugte, unverdampfte Flüssigkeitsteilchen mit einer geringeren Überhitzung des Kältemittels am Verdampferausgang zu arbeiten und damit eine optimale Nutzung der Wärmetauscherfläche des Verdampfers zu gewährleisten.

Zur Lösung dieser Aufgabe wird bei dem eingangs genannten Verfahren erfindungsgemäß

*Zeitschrift "Klima, Kälte, Heizung" Oktober 1985, Seiten ...

derart vorgegangen, daß zusätzlich zu der Überhitzungstemperatur der Druck des verdampften Kältemittels am Ausgang des Verdampfers gemessen und laufend der diesem Sättigungsdruckwert im Zustandsdiagramm des Kältemittels entsprechende Sättigungstemperaturwert ermittelt wird, daß die Differenz zwischen dem gemessenen Überhitzungstemperaturwert und dem so ermittelten Sättigungstemperaturwert bestimmt und dieser der tatsächlichen Überhitzung entsprechende Ist-Temperaturdifferenzwert mit einem vorbestimmten Soll-Temperaturdifferenzwert verglichen und aus dem Vergleich das Stellsignal für das Expansionsventil abgeleitet wird.

Durch die unmittelbare Messung des Sättigungsdampfdrucks am Verdampferausgang und die daraus erfolgende Berechnung der zugehörigen Sättigungstemperatur ist sichergestellt, daß, unabhängig von der Bauart des jeweiligen Verdampfers und von der Größe des darin auftretenden Druckverlustes des Kältemittels, die tatsächlich vorhandene Überhitzung des Kältemittels am Verdampferausgang exakt meßtechnisch erfaßt wird. Dies erlaubt es, die Überhitzung auf einen kleinen Wert zu begrenzen, der ausreicht, um den Verdichter vor Schaden zu bewahren, während andererseits die Ausnutzung der Wärmeaustauschfläche des Verdampfers entsprechend optimiert ist. Auch die praktische Erfahrung hat gezeigt, daß auf diese Weise eine Vielzahl von Kälteanlagen betriebssicher mit einer Überhitzung von lediglich 3°K betrieben werden können.

Um eine Anpassung an die spezifischen Erfordernisse der jeweiligen Kälteanlage zu ermöglichen, ist es vorteilhaft, wenn der Sollwert stufenlos einstellbar ist. Auch kann in Abhängigkeit von dem gemessenen Druck durch Eingriff auf das Stellsignal des Expansionsventils die maximale Verdampfungstemperatur stufenlos begrenzt werden, um damit den Antrieb des Verdichters vor Überlastung zu schützen.

Eine eine neue Überhitzungsregelung aufweisende Kälteanlage ist gemäß weiterer Erfindung dadurch gekennzeichnet, daß sie eine den Druck des verdampften Kältemittels am Ausgang des Verdampfers laufend messende und ein für den Meßwert kennzeichnendes Sättigungsdruck-Signal abgebende Druckmeßeinrichtung aufweist, der ein dieses Signal verarbeitender programmierter Rechner nachgeschaltet ist, welcher ein für den dem jeweils gemessenen Überhitzungstemperaturwert in dem Zustandsdiagramm des Kältemittels entsprechenden Sättigungstemperaturwert kennzeichnendes Signal erzeugt, daß in einer Subtraktionseinrichtung aus den für die Überhitzungstemperatur und die Sättigungstemperatur kennzeichnenden Signalen ein für die Differenz der beiden Temperaturwerte kennzeichnendes Istwert-Signal erzeugt wird und daß ein dieses Istwert-Signal mit einem vorgegebenen Temperaturdifferenz-Sollwert vergleichender Regler vorhanden ist, der, abhängig von diesem Sollwert-/Istwert-Vergleich, das Stellsignal für den Antrieb des Expansionsventiles erzeugt.

Diese Kälteanlage zeichnet sich dadurch aus, daß sie ohne großen zusätzlichen Aufwand stets mit einer exakt vorherbestimmten und konstant gehaltenen Überhitzung des Kältemittels am Verdampferausgang arbeitet, die ohne Gefährdung des Verdichters wesentlich kleiner ist als dies bei bekannten vergleichbaren Anlagen der Fall ist.

Die Temperaturmeßeinrichtung und die Druckmeßeinrichtung weisen mit Vorteil jeweils einen Sensor und einen dessen Signalausgang nachgeschalteten Analog-Digitalwandler auf, der an seinem Ausgang digitale Signale für den nachgeschalteten, als entsprechend programmierten Mikroprozessor ausgebildeten Rechner liefert. Auch trägt es zur weiteren Vereinfachung bei, wenn der Regler selbst ein digitales elektrisches Stellsignal abgibt und das druckentlastete Expansionsventil einen elektrischen Schrittmotorantrieb aufweist.

Dem Rechner oder Regler kann eine Einrichtung zur Begrenzung der maximalen Verdampfungstemperatur auf einen innerhalb eines vorbestimmten Bereiches frei wählbaren Maximalwert zugeordnet sein, die eine das ihr zugeführte Sättigungsdruck-Signal mit dem vorgegebenen Maximalwert vergleichende und bei Überschreiten des Maximalwertes das Stellsignal im Schließungssinne des Expansionsventiles beeinflussende elektrische Schaltung aufweist. Dadurch ist der Antriebsmotor des Verdichters vor Überlastung geschützt. Auch ist es vorteilhaft, wenn dem Schrittmotorantrieb ein fremdenergieunabhängiger elektrischer Energiespeicher zugeordnet ist, durch den das Expansionsventil in die Schließstellung fahrbar ist. Dadurch wird erreicht, daß sowohl im automatischen Betrieb der Kälteanlage, d.h. beim Abschalten des Verdichters, als auch bei völligem Abfall der Energie-Versorgung das Expansionsventil kurzzeitig völlig schließt. Durch diese Maßnahme wird die Verwendung eines üblichen Magnetventiles, das vor dem Expansionsventil zu installieren ist, überflüssig.

Außerdem kann die Kälteanlage zweckmäßigerweise eine Einrichtung zur stufenlosen Verstellung des Soll-Temperaturdifferenzwertes aufweisen, um damit eine Anpassung an unterschiedliche Betriebsbedingungen zu ermöglichen.

Für die beschriebene Kälteanlage findet mit Vorteil ein Expansionsventil der eingangs genannten Art Verwendung, das erfindungsgemäß dadurch gekennzeichnet ist, daß das Ventilgehäuse durch eine auf ihrer einen Seite mit dem Ventilglied gekuppelte erste Membran abgeschlossen ist, auf die auf der anderen Seite ein Betätigungsglied des auf das Ventilgehäuse aufgesetzten elektromotorischen Antriebs einwirkt, daß das Betätigungsglied mit einer zweiten Membran gekuppelt ist, die einseitig mit dem in dem Ventilgehäuse herrschenden Kältemitteldruck in einer Richtung beaufschlagt ist, die der Richtung der von dem Kältemittel herrührenden Druckbeaufschlagung der ersten Membran entgegengerichtet ist und daß der elektromotorische Antrieb durch die Membranen hermetisch gegen das Kältemittel abgedichtet ist.

Der in der Regel einen Schrittmotor aufweisende elektromotorische Antrieb liegt mit seiner Wicklung somit nicht in dem Kältemittelkreislauf, sondern lediglich in der Atmosphäre, so daß auch keine speziellen kältemittelbeständigen Lackdraht-Isolierungen erforderlich sind. Außerdem ist das Betätigungsglied vollkommen druckkompensiert, mit dem Ergebnis, daß der elektromotorische Antrieb lediglich für eine minimale Antriebsleistung ausgelegt zu werden braucht, die bei den üblichen Ventilgrößen etwa zwischen 3 und 10 Watt liegen kann, um eine Vorstellung von den Größenordnungen zu geben.

Ein besonders einfacher und raumsparender Aufbau ergibt sich, wenn der elektromotorische Antrieb einen einen koaxialen Spindeltrieb antreibenden Elektromotor aufweist, dessen hohle Welle als Spindelmutter ausgebildet oder mit einer solchen drehfest verbunden ist und eine das Betätigungsglied bildende Gewindespindel umschließt. Damit entfällt ein separates Getriebe, was zu minimalen Abmessungen führt.

Auch ist es vorteilhaft, wenn der Elektromotor auf seiner einen Stirnseite über ein koaxiales, die erste Membran enthaltendes erstes Membrangehäuse mit dem Ventilgehäuse verbunden ist und auf seiner anderen Stirnseite ein die zweite Membran enthaltendes zweites Membrangehäuse trägt, das über eine Druckkompensationsleitung mit dem Ventilgehäuse in Verbindung steht, wobei die Gewindespindel beidseitig mit den beiden Membranen auf deren kältemittelfreien Seiten gekuppelt ist. Die Membrangehäuse können lösbar mit dem Elektromotor verbunden sein, womit die ganze Anordnung leicht auseinandergenommen werden kann. Im Falle eines Defektes des Elektromotors ist dieser zusammen mit dem Spindeltrieb leicht austauschbar, ohne daß der Kältemittelkreislauf geöffnet werden müßte.

In der Zeichnung ist ein Ausführungsbeispiel des Gegenstandes der Erfindung dargestellt. Es zeigen:

Fig. 1 eine Kälteanlage gemäß der Erfindung, in schematischer Blockdarstellung;

Fig. 2 ein lgp/h-Diagramm zur Veranschaulichung des Kreisprozesses der Kälteanlage nach Fig. 1, und

Fig. 3 das Expansionsventil der Kälteanlage nach Fig. 1, im axialen Schnitt, in einer Seitenansicht.

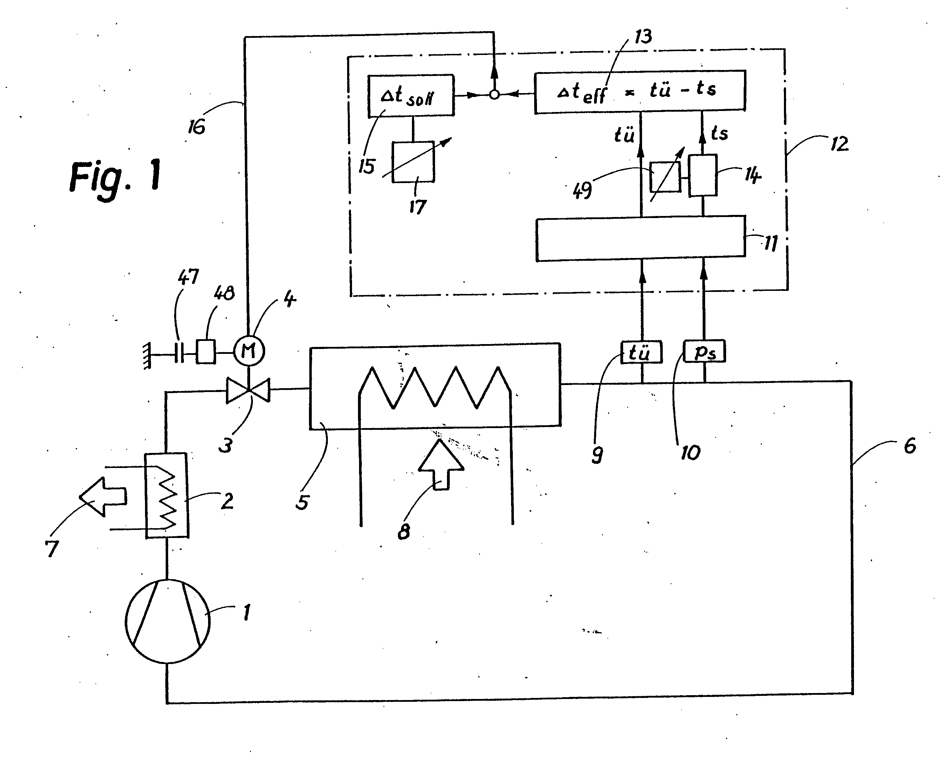

Die in Fig. 1 dargestellte Kälteanlage weist einen Verdichter oder Kompressor 1, einen Kondensator 2, ein als Stellventil ausgebildetes Expansionsventil 3 mit zugeordnetem motorischem Stellantrieb 4 und einen Verdampfer 5 auf. Diese Elemente sind in der angegebenen Reihenfolge in einem bei 6 angedeuteten, mit einem geeigneten Kältemittel (Ammoniak, Freon, Frigen etc.) gefüllt. Der Verdichter 1, der Kondensator 2 und der Verdampfer 5 sind an sich bekannter Bauart und deshalb nicht weiter beschrieben. Die Kälteanlage arbeitet grundsätzlich nach dem in dem Mollier-h,lgp-Zustandsdiagramm dargestellten Kreisprozeß. In dem Zustandsdiagramm ist der Druck p des Kältemittels logarithmisch über der Enthalpie h des Kältemittels aufgetragen. Mit $x = 0$ und $x = 1$ sind die beiden Grenzkurven des Naßdampfgebietes bezeichnet, wobei x den spezifischen Dampfgehalt bedeutet;

Am Ausgang des Verdampfers 5 wird von dem Verdichter 1 überhitzter Kältemitteldampf abgesaugt ("a") und (näherungsweise adiabatisch) auf den Kondensator-Druck p gebracht ("b"), der so hoch gewählt ist, daß anschließend in dem Kondensator 2 Kondensationswärme bei der dem Druck p entsprechenden Sättigungstemperatur t an die Umgebung (Luft, Kühlwasser) abgeführt werden kann, wie dies durch einen Pfeil 7 in Fig. 1 angedeutet ist. Das bei "c" verflüssigte Kältemittel wird in dem Expansionsventil 3 längs einer Drosselkurve auf den Verdampferdruck $p_0$ entspannt ("d"); es verdampft sodann in dem Verdampfer 5 bei der zugeordneten Verdampfertemperatur $t_0$ unter Wärmeaufnahme aus dem zu kühlenden Medium (Luft, Sole, Wasser etc.), wie dies durch einen Pfeil 8 in Fig. 1 angezeigt ist.

Wegen des in dem Verdampfer 5 auftretenden Druckabfalles des Kältemittels ist der Verdampferdruck $p_0$ in dem beschriebenen Arbeitsdiagramm tatsächlich nicht konstant; er liegt am Verdampferausgang ("a' ") tiefer als am Verdampfereingang ("d"), so daß der Verdichter 1 tatsächlich am Verdampferausgang überhitzten Kältemitteldampf von niedrigerem Druck ansaugt ("a' ").

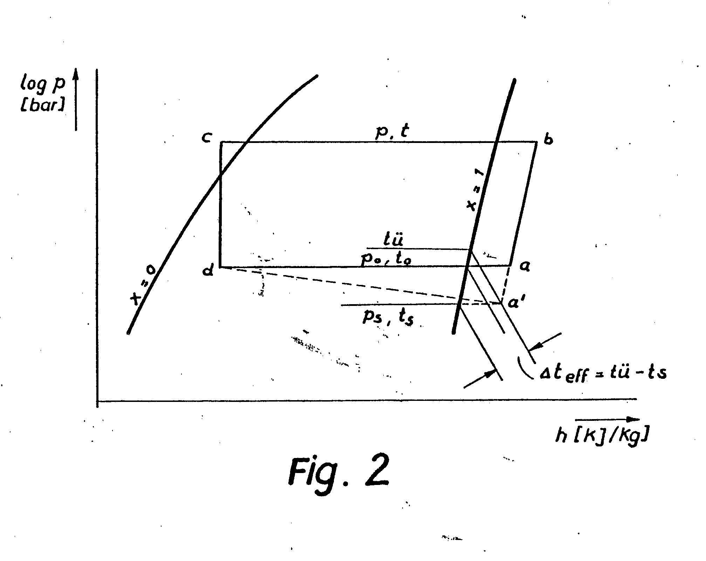

Unmittelbar am Ausgang des Verdampfers 5 sind in dem Kreislauf 6 ein Temperatursensor 9 und ein Drucksensor 10 angeordnet. Der Temperatursensor 9 mißt somit am Verdampferausgang unmittelbar die Überhitzungstemperatur $t_ü$ des verdampften Kältemittels (bei "a' " in Fig.2), während durch den Drucksensor 10 an der gleichen Stelle ("a' ") der Sättigungsdruck $p_s$ des verdampften Kältemittels gemessen wird. Die Temperatursonde 9 und die Drucksonde 10 geben für die jeweiligen Meßwerte kennzeichnende Analogsignale auf den Eingang eines gemeinsamen Analog-/Digitalwandlers 11, der Teil eines bei 12 schematisch angedeuteten elektronischen Reglers ist. Vom Ausgang des Analog-/Digitalwandlers 11 werden die entsprechend digitalisierten Überhitzungstemperatur-Signale unmittelbar einer Subtraktionsschaltung 13 des Reglers 12 zugeführt, während die digitalisierten Sättigungsdruck-Signale in einen als Mikroprozessor ausgebildeten Rechner 14 des Reglers 12 eingespeist werden, dessen Signalausgang seinerseits wiederum mit der Subtraktionsschaltung 13 verbunden ist. Der Mikroprozessor des Rechners 14 ist mit den Daten des Zustandsdiagrammes (Fig. 2) des jeweils verwendeten Kältemittels programmiert. Er errechnet aus den ihm zugeführten, für den jeweiligen Sättigungsdruck $p_s$ kennzeichnenden Signalen anhand der gespeicherten Grenzkurve $x = 1,0$ laufend die den gemessenen Sättigungsdruckwerten $p_s$ entsprechenden Werte der zugehörigen Sättigungstemperatur $t_s$ und gibt an seinem Ausgang entsprechende Sättigungstemperatur-Signale an die Subtraktionsschaltung 13 ab.

Die Subtraktionsschaltung 13 errechnet aus den für die Überhitzungstemperatur und die Sättigungstemperatur $t_{ü}$ bzw. $t_s$ kennzeichnenden Signalen die Temperaturdifferenz $\Delta t_{eff} = t_{ü} - t_s$, d.h. den Istwert der tatsächlich am Verdampferausgang auftretenden Überhitzung. Für diese Überhitzung $\Delta t_{eff}$ kennzeichnende Signale werden in dem Regler 12 mit von einem Sollwertgeber 15 abgegebenen Sollwertsignalen verglichen; abhängig von dem Vergleich gibt der Regler 12 über eine Leitung 16 elektrische Stellsignale an den Stellantrieb 4 des Expansionsventiles 3 ab. Das Expansionsventil wird auf diese Weise derart geregelt, daß es in den Verdampfer 5 stets genau den Massenstrom flüssigen Kältemittels einspeist, der bei der Verdampfung unter den jeweiligen Betriebsbedingungen ein dem jeweiligen Sollwert der Überhitzung $\Delta t_{soll}$ entsprechendes Gleichgewicht zwischen zugeführtem und abgesaugtem Kältemittel ergibt.

Der Regler 12 arbeitet proportional-integral; er kann grundsätzlich aber auch für jedes andere zweckentsprechende Regelverfahren ausgelegt sein. Da in der beschriebenen Weise über die direkte Messung des Sättigungsdruckes $p_s$ am Verdampferausgang und die Messung der Überhitzungstemperatur $t_{ü}$ an der gleichen Stelle die tatsächliche Überhitzung $\Delta t_{eff}$ meßtechnisch sehr genau erfaßt wird, wird auch der Überhitzungsbereich sehr exakt eingeregelt, was wiederum bedeutet, daß lediglich die für den Schutz des Verdichters 1 erforderliche geringe Überhitzung aufrecht erhalten werden muß und keine Sicherheitstoleranzfelder insoweit erforderlich sind.

Mit dem Sollwertgeber 15 ist ein Stellorgan 17 verbunden, das es gestattet, den Sollwert $\Delta t_{soll}$ stufenlos zu verändern, um damit eine optimale Anpassung an die jeweiligen Erfordernisse der Kälteanlage zu ermöglichen.

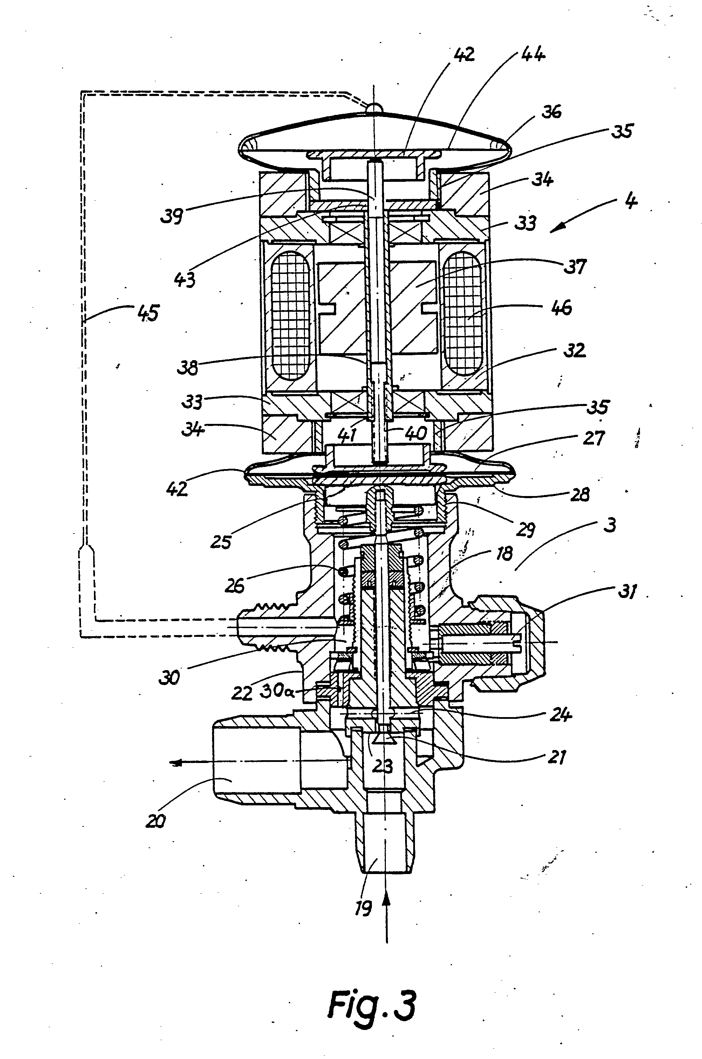

Das Expansionsventil 3 ist in seinem Aufbau aus Fig.3 ersichtlich:

In einem Ventilgehäuse 18, das einen Kältemittelzulaufstutzen 19 und einen Kältemittelablaufstutzen 20 aufweist, ist ein kegelförmiges Ventilverschlußglied 21 mittels einer koaxialen Ventilspindel 22 axial verschieblich gelagert, das mit einem Ventilsitz 23 zusammenwirkt, welcher einen Durchlaßkanal 24 steuert. Mit der Ventilspindel 22 ist endseitig ein Membranteller 25 verbunden, das unter der Wirkung einer Druckfeder 26 steht und sich gegen eine Membrane 27 abstützt, die randseitig in einem ersten Membrangehäuse 28 abgedichtet eingespannt ist, welches seinerseits mittels eines Gewindestutzens 29 auf das Ventilgehäuse 3 aufgeschraubt ist. Die Membran 27 ist auf der der Ventilspindel 22 zugewandten Seite mit unter Druck stehendem Kältemittel beaufschlagt, das einen Raum 30 des Ventilgehäuses 18 ausfüllt, welcher mit dem Kanal 24 über einen Ausgleichskanal 30a in Verbindung steht. Über eine Stellschraube 31 ist die Vorspannung der Druckfeder 26 verstellbar. Die Druckfeder 26 bringt die erforderliche Schließkraft auf, die zur Überwindung aller mechanischen Reibungskräfte im Ventil und der Hysterese beider Membranen 27, 44 erforderlich ist.

Das Expansionsventil 3 ist in seinem Aufbau insoweit bekannt; es findet als thermostatisches Expansionsventil Verwendung, wobei sein Membrangehäuse 28 mit der Kapillare eines mit einer Ausdehungsflüssigkeit gefüllten Temperatursensors in Verbindung steht.

Abweichend von dieser bekannten Ausbildung, ist im vorliegenden Falle auf das Membrangehäuse 28 ein Schrittmotor 32 aufgesetzt, dessen Lagerschild 33 mit einem Anschlußflansch 34 verbunden ist, welcher lösbar auf einen Gewindestutzen 35 des oben offenen Membrangehäuses 28 aufgeschraubt ist. Auf seiner gegenüberliegenden Stirnseite trägt der Schrittmotor 32 ebenfalls einen auf das Lagerschild 33 aufgesetzten Anschlußflansch 34, welcher wiederum mit dem Gewindestutzen 35 eines zweiten Membrangehäuses 36 verschraubt ist. Der bei 37 angedeutete Läufer des Schrittmotors 32 ist über eine Hohlwelle 38 in den beiden Lagerschilden 33 drehbar gelagert. Die Hohlwelle 38 umschließt eine ein Betätigungsglied bildende zylindrische Spindel 39, die an ihrem unteren Ende ein Außengewinde 40 trägt, das mit einem Innengewinde 41 der Hohlwelle 38 unter Ausbildung eines Spindeltriebs zusammenwirkt.

Beidseitig ist die Spindel 39 gegen zwei Membranteller 42 abgestützt, die in den beiden Membrangehäusen 28, 36 axial verschieblich geführt sind, während die Spindel 39 selbst bei 43 drehfest, aber axial verschieblich gehalten ist. Das obere Membranteller 42 liegt an einer in dem Membrangehäuse 36 randseitig abgedichtet eingespannten zweiten Membran 44 an, welche über eine Druckkompensationsleitung 45 mit dem Raum 30 des Ventilgehäuses 18 verbunden und damit mit dem Kältemitteldruck beaufschlagt ist. Beide Membranen 27, 44 sind somit auf einander abgewandten Seiten mit dem gleichen Druck beaufschlagt, mit dem Ergebnis, daß die das Betätigungsglied bildende Spindel 39 axial vollständig von dem Druck des Kältemittels entlastet ist.

Unter der Wirkung der der Ständerwicklung 46 des Schrittmotors 32 über die Leitung 16 (Fig. 1) zugeführten impulsförmigen Stellsignale verdreht der Läufer 37 des Schrittmotors 32 seine Hohlwelle 38, womit die Spindel 39 um ein entsprechendes Maß in Achsrichtung verschoben wird. Dabei verstellt sie über das Membranteller 25 bspw. gegen die Wirkung der Druckfeder 26 das Ventilglied 21, wobei aus dem Raum 30 durch die Membran 27 verdrängtes Kältemittel über die Druckkompensationsleitung 45 in das zweite Membrangehäuse 36 ausweicht, so daß immer eine Druckkompensation der Spindel 39 aufrechterhalten bleibt und der Schrittmotor 32 lediglich die zur Überwindung der durch die Druckfeder 26 vorgegebenen Vorspannung erforderliche Kraft aufzubringen hat.

Der Schrittmotor 32 ist ersichtlich durch die beiden Membranen 27, 36 hermetisch gegen das Kältemittel abgedichtet. Er ist im Falle eines Defektes leicht austauschbar, da er lediglich von den beiden Membrangehäusen 27, 36 abgeschraubt zu werden braucht, ohne daß der Kältemittelkreislauf geöffnet werden müßte.

Um zu erreichen, daß im automatischen Betrieb der Kälteanlage, d.h. beim Abschalten des Verdichters 1, und auch bei völligem Ausfall der Energieversorgung, das Expansionsventil 3 innerhalb kurzer Zeit (bspw. ca. 4 Sekunden) völlig schließt, ist ein fremdenergieunabhängiger Energiespeicher vorgesehen. Dieser ist durch einen in Fig. 1 bei 47 angedeuteten Kondensator gebildet, dessen Entladungsenergie ausreicht, den nur eine geringe Antriebsenergie erfordernden Schrittmotor 32 solange anzutreiben, bis das Ventilglied 21 sicher in die Schließstellung gefahren ist. Die aus dem von dem Kondensator 47 abgegebenen Entladungsstrom entsprechende Schrittimpulse für den Schrittmotor 32 erzeugende elektronische Schaltung ist bei 48 angedeutet.

Da bei der beschriebenen Kälteanlage durch den Drucksensor 10 der Druck des Kältemittels auf der Ausgangsseite des Verdampfers 5 ohnehin gemessen wird, kann das so gewonnene Sättigungsdruck-Signal unmittelbar zur Begrenzung der maximalen Verdampfungstemperatur auf einen innerhalb eines vorbestimmten Bereiches frei wählbaren Maximalwert herangezogen werden. Da mit steigenden Verdampfungstemperaturen in einer Kälteanlage auch die Antriebsleistung des Verdichters schnell ansteigt, ist es zweckmäßig, insbesondere bei Tiefkühl-und Sole-Anlagen etc. den Saugdruck des Verdichters zu begrenzen.

Zu diesem Zwecke ist in dem Regler 12 eine dem Rechner 14 zugeordnete Maximalwertbegrenzungsschaltung 49 vorgesehen, die es gestattet, innerhalb eines vorbestimmten Bereiches den jeweils gewünschten Maximalwert frei zu wählen. Die Schaltung 49 vergleicht das ihr vom Ausgang des Analog-/Digital-Wandlers 11 zugeführte digitalisierte Sättigungsdruck-Signal mit dem Maximalwert; bei Überschreiten des Maximalwertes gibt der Rechner 14 an seinem Ausgang an die Subtraktionsschaltung 13 ein solches Signal ab, daß das von dem Regler 12 über die Leitung 16 dem Ventilantrieb 4 zugeführte Stellsignal im Schließungssinne des Expansionsventiles 3 beinflußt wird.

## Ansprüche

1. Verfahren zur Regelung der Überhitzung des Kältemittels am Ausgang eines in einem zumindest noch einen Verdichter und ein Expansionsventil enthaltenden Kältemittelkreislauf betriebenen Verdampfers einer Kälteanlage, bei dem die Überhitzungstemperatur am Verdampferausgang laufend gemessen und aus dem Überhitzungstemperatur-Meßwert und anderen überwachten Parametern des Kältemittelkreislaufes durch Vergleich mit einem Sollwert ein Stellsignal für das Expansionsventil abgeleitet wird, **dadurch gekennzeichnet,** daß zusätzlich der Druck des verdampften Kältemittels am Ausgang des Verdampfers gemessen und laufend der diesem Sättigungsdruckwert ($p_s$) im Zustandsdiagramm des Kältemittels entsprechende Sättigungstemperaturwert ($t_s$) ermittelt wird, daß die Differenz zwischen dem gemessenen Überhitzungstemperaturwert ($t_{ü}$) und dem so ermittelten Sättigungstemperaturwert ($t_s$) bestimmt und dieser der tatsächlichen Überhitzung entsprechende Ist-Temperaturdifferenzwert ($\Delta t_{eff}$) mit einem vorbestimmten Soll-Temperaturdifferenzwert ($\Delta t_{soll}$) verglichen und aus dem Vergleich das Stellsignal abgeleitet wird.

2. Verfahren nach Anspruch 1, dadurch gekennzeichnet, daß der Sollwert stufenlos einstellbar ist.

3. Verfahren nach Anspruch 1 oder 2, dadurch gekennzeichnet, daß in Abhängigkeit von dem gemessenen Druck durch Eingriff auf das Stellsignal des Expansionsventils die maximale Verdampfungstemperatur stufenlos begrenzt wird.

4. Kälteanlage mit einem Kältemittelkreislauf, der zumindest einen Verdichter, ein als Regelventil ausgebildetes Expansionsventil und einen Verdampfer enthält, mit einer am Ausgang des Verdampfers ange ordneten Temperaturmeßeinrichtung zur Messung der Überhitzungstemperatur des Kältemittels und mit einer Regeleinrichtung, die aus einem von der Temperaturmeßeinrichtung abgegebenen, für die Überhitzungstemperatur kennzeichnenden Signal und aus für andere Parameter des Kältemittelkreislaufes kennzeichnenden Signalen ein Stellsignal für das Expansionsventil ableitet, **dadurch gekennzeichnet,** daß sie eine den Sättigungsdruck (p$_s$) des verdampften Kältemittels am Ausgang des Verdampfers (5) laufend messende und ein für den Meßwert kennzeichnendes Sättigungsdruck-Signal abgebendes Druckmeßeinrichtung (10) aufweist, der ein dieses Signal verarbeitender programmierter Rechner (14) nachgeschaltet ist, welcher ein für den dem jeweils gemessenen Überhitzungstemperaturwert (t$_{ü}$) in dem Zustandsdiagramm des Kältemittels entsprechenden Sättigungstemperaturwert (t$_s$) kennzeichnendes Signal erzeugt, daß in einer Subtraktionseinrichtung (13) aus den für die Überhitzungstemperatur (t$_{ü}$) und die Sättigungstemperatur (t$_s$) kennzeichnenden Signalen ein für die Differenz ( Δt$_{eff}$) der beiden Temperaturwerte kennzeichnendes Istwert-Signal erzeugt wird und daß ein dieses Istwert-Signal mit einem vorgegebenen Temperaturdifferenz-Sollwert (Δt$_{soll}$) vergleichender Regler (12) vorhanden ist, der abhängig von diesem Sollwert-/Istwert-Vergleich das Stellsignal für den Antrieb (4) des Expansionsventiles (3) erzeugt.

5. Kälteanlage nach Anspruch 4, dadurch gekennzeichnet, daß die Temperaturmeßeinrichtung und die Druckmeßeinrichtung jeweils einen Sensor (9,10) und einen dessen Signalausgang nachgeschalteten Analog-/Digitalwandler (11) aufweisen.

6. Kälteanlage nach Anspruch 4 oder 5, dadurch gekennzeichnet, daß der Regler (12) ein elektrisches Stellsignal abgibt und das druckentlastete Expansionsventil (3) einen elektrischen Schrittmotorantrieb (32) aufweist.

7. Kälteanlage nach einem der Ansprüche 4 bis 5, dadurch gekennzeichnet, daß dem Rechner (14) oder dem Regler (12) eine Einrichtung (49) zur Begrenzung der maximalen Verdampfungstemperatur auf einen innerhalb eines vorbestimmten Bereiches frei wählbaren Maximalwert zugeordnet ist, die eine das ihr zugeführte Sättigungsdruck-Signal mit dem vorgegebenen Maximalwert vergleichende und bei Überschreiten des Maximalwertes das Stellsignal im Schließungssinne des Expansionsventiles (3) beeinflussende elektrische Schaltung (49) aufweist.

8. Kälteanlage nach einem der Ansprüche 6 oder 7, dadurch gekennzeichnet, daß dem Schrittmotorantrieb (32) ein fremdenergieunabhängiger elektrischer Energiespeicher (47) zugeordnet ist, durch den das Expansionsventil (3) in die Schließstellung fahrbar ist.

9. Kälteanlage nach einem der Ansprüche 4 bis 8, dadurch gekennzeichnet, daß sie eine Einrichtung (17) zur stufenlosen Verstellung des Soll-Temperaturdifferenzwertes (Δt$_{soll}$) aufweist.

10. Druckentlastetes Expansionsventil für eine Kälteanlage nach einem der Ansprüche 4 bis 9, mit einem elektromotorischen Antrieb für das in einem Ventilgehäuse verstellbar gelagerte Ventilglied, dadurch gekennzeichnet, daß das Ventilgehäuse (18) durch eine auf ihrer einen Seite mit dem Ventilglied (21) gekuppelte erste Membran (27) abgeschlossen ist, auf die auf der anderen Seite ein Betätigungsglied (39) des auf das Ventilgehäuse (18) aufgesetzten elektromotorischen Antriebs (4) einwirkt, daß das Betätigungsglied (39) mit einer zweiten Membran (44) gekuppelt ist, die einseitig mit dem in dem Ventilgehäuse (18) herrschenden Kältemitteldruck in einer Richtung beaufschlagt ist, die der Richtung der von dem Kältemittel herrührenden Druckbeaufschlagung der ersten Membran (27) entgegengerichtet ist und daß der elektromotorische Antrieb (4) durch die Membranen (27,44) hermetisch gegen das Kältemittel abgedichtet ist.

11. Expansionsventil nach Anspruch 10, dadurch gekennzeichnet, daß der elektromotorische Antrieb einen einen koaxialen Spindeltrieb antreibenden Elektromotor (32) aufweist, dessen hohle Welle (38) als Spindelmutter ausgebildet oder mit einer solchen drehfest verbunden ist und eine das Betätigungsglied bildende Gewindespindel (39) umschließt.

12. Expansionsventil nach Anspruch 11, dadurch gekennzeichnet, daß der Elektromotor (32) auf seiner einen Stirnseite über ein koaxiales, die erste Membran (27) enthaltendes erstes Membrangehäuse (28) mit dem Ventilgehäuse (18) verbunden ist und auf seiner anderen Stirnseite ein die zweite Membran (44) enthaltendes zweites Membrangehäuse (36) trägt, das über eine Druckkompensationsleitung (45) mit dem Ventilgehäuse (18) in Verbindung steht und daß die Gewindespindel (39) beidseitig mit den beiden Membranen (27, 44) auf deren kältemittelfreien Seiten gekuppelt ist.

13. Expansionsventil nach Anspruch 11, dadurch gekennzeichnet, daß die Membrangehäuse (28, 36) lösbar mit dem Elektromotor (32) verbunden sind.

Fig. 1

Fig. 2

0 288 902

0 288 902

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 138 094 (BROWN, BOVERI & CIE AG) * Insgesamt * | 1,2,4,5,9 | F 25 B 49/00 F 25 B 41/06 |
| Y | | 6 | |
| Y | EP-A-0 147 356 (CARRIER CORP.) * Insgesamt * | 6 | |
| X | US-A-4 478 051 (IBRAHIM) * Insgesamt * | 1,2,4,9 | |
| P,A | EP-A-0 229 942 (OTTO EGELHOF GmbH & CO.) * Insgesamt * | 1-4,6,7,9 | |
| A | US-A-4 618 092 (FUKUSHIMA et al.) * Insgesamt * | 10 | |
| A | EP-A-0 147 357 (CARRIER CORP.) | | |

**RECHERCHIERTE SACHGEBIETE (Int. Cl.4)**

F 25 B

Der vorliegende Recherchenbericht wurde für alle Patentansprüche erstellt

| Recherchenort | Abschlußdatum der Recherche | Prüfer |
|---|---|---|
| DEN HAAG | 02-06-1988 | SILVIS H. |

EPO FORM 1503 03.82 (P0403)